# EUROPÄISCHE PATENTSCHRIFT

(11) **EP 3 061 342 B1**
(45) Veröffentlichungstag und Bekanntmachung des Hinweises auf die Patenterteilung: **11.10.2017**
(21) Anmeldenummer: 16156709.4
(22) Anmeldetag: 22.02.2016
(51) Int. Cl.: A01K 5/00, B01F 7/24, B03C 1/033, B03C 1/12

(54) **VERTIKALMISCHSCHNECKE MIT MAGNET FÜR FUTTERMISCHWAGEN**
VERTICAL MIXING SCREW WITH MAGNET FOR A FEED MIXING WAGON
VIS MELANGEUSE VERTICALE A AIMANT POUR MELANGEUSES

(30) Priorität: 27.02.2015 DE 202015001543 U
(43) Veröffentlichungstag der Anmeldung: 31.08.2016
(73) Patentinhaber: Mayer Verwaltungs GmbH & Co. KG, 84529 Tittmoning (DE)
(72) Erfinder: Winkler, Gerhard, 83278 Traunstein (DE)
(74) Vertreter: Bauer, Friedrich

(56) Entgegenhaltungen:
- EP-A1- 2 727 650
- WO-A1-2015/119562
- WO-A2-2012/099892
- DE-U1-202011 003 695

## Beschreibung

Die Erfindung betrifft eine Vertikalmischschnecke für Futtermischwagen zum Mischen von Futtermittel gemäß dem Oberbegriff des Anspruches 1.

In der Landwirtschaft ist es bekannt, zum Mischen von Futtermitteln wie Silage, Mais, Kraftfutter etc. Futtermischwagen zu verwenden, die mindestens eine um eine vertikale Drehachse drehbare Mischschnecke aufweisen.

Aus der DE 20 2011 003 695 U1 ist eine Vertikalmischschnecke gemäß dem Oberbegriff des Anspruches 1 bekannt, der an einem bodenseitigen, vom Schneckengewinde getrennten Zusatzflügel der Vertikalmischschnecke einen Magneten aufweist. Ein derartiger Magnet hat die Aufgabe, Metallteile, d.h. ferromagnetisches, ferrithaltiges oder teilferrithaltiges Material wie Stahlteile, Stahlspäne, Nägel, Reineisen, Gusseisen aus dem zu mischenden Futtermittel abzuscheiden und durch die natürlich oder elektrisch erzeugte magnetische Wirkung festzuhalten, so dass eine Verletzung der Tiere durch im Futtermittel enthaltene Metallteile verhindert werden kann. Bei der Mischschnecke gemäß DE 20 2011 003 695 U1 befindet sich der Magnet an der, in Umdrehungsrichtung gesehen, hinteren Seite des Zusatzflügels, wobei der Magnet in einem nach unten abgekanteten Endbereich des Zusatzflügels befestigt ist.

Aus der EP 2 727 650 A1 ist es bekannt, im Bereich einer Austragsöffnung eines Futtermischwagens eine Metallentfernungsvorrichtung mit drei rotierenden Magnetwalzen vorzusehen, zwischen denen das Futtermittel beim Ausbringen aus dem Mischbehälter hindurchbewegt wird.

Der Erfindung liegt die Aufgabe zugrunde, eine Vertikalmischschnecke der eingangs genannten Art zu schaffen, mit der das Aussondern von Metallteilen aus dem zu mischenden Futtermittel während des Mischvorgangs auf besonders einfache, kostengünstige und wirksame Weise durchgeführt werden kann.

Diese Aufgabe wird erfindungsgemäß durch eine Vertikalmischschnecke mit den Merkmalen des Anspruches 1 gelöst. Vorteilhafte Ausführungsformen der Erfindung sind in den weiteren Ansprüchen beschrieben.

Erfindungsgemäß ist der Magnet im Bereich einer Aussparung zwischen dem Anfang und dem Ende des Schneckengewindes angeordnet, wobei der Magnet die Aussparung zumindest überwiegend überbrückt.

Durch die erfindungsgemäße Anordnung des Magneten im Bereich des Schneckengewindes können Metallteile besonders wirkungsvoll aus dem zu mischenden Futter während des Mischvorgangs ausgesondert und festgehalten werden. Tiere sind dadurch besonders wirkungsvoll vor der unbeabsichtigten Aufnahme von Metallteilen geschützt. Schäden durch verkeilende Metallteile innerhalb des Futtermischwagens können vermieden werden. Darüber hinaus ist der Magnet auf einfache Weise im Bereich der Aussparung derart befestigbar, dass durch den Magneten bzw. dessen Halterung der Reibungswiderstand zwischen Vertikalmischschnecke und Futtermittel nicht oder nicht wesentlich erhöht wird.

Vorteilhafterweise ist der Magnet in einer im Querschnitt U-förmigen Halterung eingesetzt, die beidseits an den die Aussparung begrenzenden Wänden des Schneckengewindes befestigt ist. Mit Hilfe einer derartigen Halterung kann der Magnet auf besonders einfache und sichere Weise zuverlässig an der Vertikalmischschnecke befestigt werden.

Alternativ hierzu ist es auch möglich, dass der Magnet an einer vorzugsweisen ebenen Trägerplatte befestigt ist, welche die Aussparung an der Unterseite des Schneckengewindes vollständig überbrückt und dort festgeschraubt oder festgeklemmt ist.

Vorteilhafterweise umfasst der Magnet eine nach oben freie Magnetfläche zum Sammeln der Metallteile, wobei die Magnetfläche die gleiche Steigung wie das Schneckengewinde im Nachbarschaftsbereich des Magneten aufweist. Diese freie Magnetfläche kann fluchtend zur Oberseite des Schneckengewindes oder auch etwas vertieft hierzu verlaufen. Hierdurch gleitet das Futtermittel besonders leicht über den Magneten.

Alternativ hierzu ist es jedoch auch möglich, dass der Magnet eine nach oben freie Magnetfläche zum Sammeln der Metallteile aufweist, wobei die Magnetfläche in Drehrichtung der Vertikalmischschnecke nach hinten mit einem Winkel zwischen 0° und 45° zur Horizontalebene schräg abfällt bzw. verläuft. Hierdurch kann auf besonders wirkungsvolle Weise vermieden werden, dass die vom Magneten festgehaltenen Metallteile durch das Futtermittel wieder vom Magneten abgestreift werden.

Vorteilhafterweise erstreckt sich der Magnet in radialer Richtung der Vertikalmischschnecke über 80 % bis 100 % der Breite des Schneckengewindes. Hierdurch kann eine besonders wirkungsvolle Aussonderung von Metallteilen bewirkt werden.

Gemäß einer vorteilhaften Ausführungsvariante sind mehrere Magneten vorgesehen, die in radialer Richtung der Vertikalmischschnecke relativ zueinander versetzt am Schneckengewinde befestigt sind. In diesem Fall müssen sich die Magnete nicht über die gesamte Breite des Schneckengewindes erstrecken. Dies bietet den Vorteil, dass das Schneckengewinde nicht über seine gesamte Breite durch eine durchgehende Aussparung unterbrochen wird, wodurch die Stabilität des Schneckengewindes weniger beeinträchtigt wird. Beispielsweise ist es ohne weiteres möglich, die Aussparungen und Magnete derart anzuordnen, dass sie sowohl zur Schneckenwelle als auch zum äußeren Rand des Schneckengewindes einen Abstand aufweisen, sich jedoch insgesamt über den größeren Teil der Breite des Schneckengewindes erstrecken.

Es ist auch ohne weiteres möglich, mehrere Magnete vorzusehen, die relativ zueinander winklig hintereinander oder parallel zueinander angeordnet sind.

Vorteilhafterweise ist das Schneckengewinde im Bereich der Aussparung stufig ausgebildet, wobei ein Anschlussbereich eines Folgeabschnitts des Schneckengewindes tiefer oder gleich hoch liegt wie ein Endabschnitt eines vorauseilenden Abschnitts des Schneckengewindes. Hierdurch bildet der vorauseilende Abschnitt des Schneckengewindes unmittelbar vor der Aussparung eine Art Rampe, die bewirkt, dass der Druck des Futtermittels auf den Magneten verringert wird. Hierdurch wird die Gefahr, dass am Magneten anhaftende Metallgegenstände durch das Futtermittel beim Mischvorgang wieder abgestreift werden, stark verringert.

Alternativ oder zusätzlich ist es auch möglich, dass vor der Aussparung eine Abweiserleiste auf dem Schneckengewinde angeordnet ist, welche eine Rampe für das Futtermittel bildet. Auch hierdurch wird ebenfalls der Druck des Futtermittels auf den Magneten beim Mischvorgang entsprechend verringert.

Die Erfindung wird nachfolgend anhand der Zeichnungen beispielhaft näher erläutert. Es zeigen:
- Figur 1:: eine Seitenansicht einer ersten Ausführungsform einer erfindungsgemäßen Vertikalmischschnecke;
- Figur 2:: die Vertikalmischschnecke von Figur 1 schräg von oben;
- Figur 3:: die Vertikalmischschnecke von Figur 1 schräg von unten;
- Figur 4:: eine Seitenansicht einer zweiten Ausführungsform einer erfindungsgemäßen Vertikalmischschnecke;
- Figur 5:: die Vertikalmischschnecke von Figur 4 schräg von oben;
- Figur 6:: eine Seitenansicht einer dritten Ausführungsform einer erfindungsgemäßen Vertikalmischschnecke;
- Figur 7:: die Vertikalmischschnecke von Figur 6 schräg von unten;
- Figur 8:: eine vierte Ausführungsform der erfindungsgemäßen Vertikalmischschnecke schräg von oben;
- Figur 9:: eine fünfte Ausführungsform der erfindungsgemäßen Vertikalmischschnecke schräg von oben;
- Figur 10:: eine Seitenansicht einer sechsten Ausführungsform der erfindungsgemäßen Vertikalmischsschnecke;
- Figur 11:: die Vertikalmischschnecke von Figur 10 schräg von oben; und

- Figuren 12 bis 14:: eine Seitenansicht, Ansicht schräg von oben bzw. Ansicht schräg von unten einer siebten Ausführungsform der erfindungsgemäßen Vertikalmischschnecke.

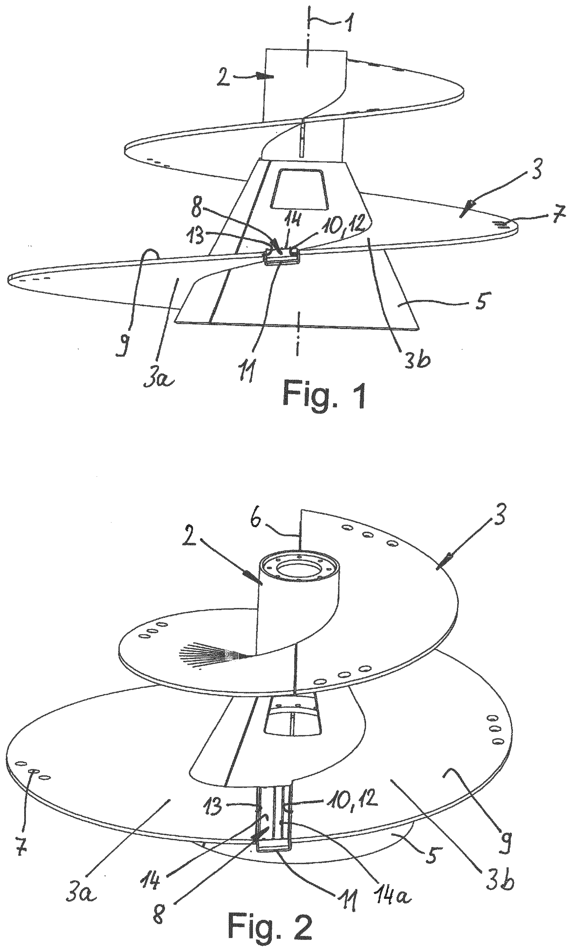

Anhand der Figuren 1 bis 3 wird zunächst ein erstes Ausführungsbeispiel der erfindungsgemäßen Vertikalmischschnecke beschrieben. Die Vertikalmischschnecke ist dort in vereinfachter Form dargestellt. Das Schneidmesser und die obere Spitze sind der Übersichtlichkeit halber weggelassen worden.

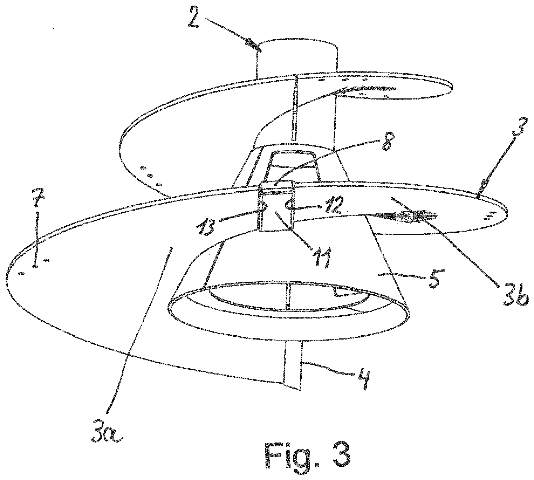

Die Vertikalmischschnecke ist um eine vertikale Drehachse 1 drehbar und weist demgemäß eine vertikal anordenbare Schneckenwelle 2 auf, um die sich ein Schneckengewinde 3 spiralförmig herumerstreckt. Das Schneckengewinde 3 beginnt am unteren Ende der Mischschnecke 1 mit einer Gewindeanfangskante 4 (Figur 3), die sich von einem Schneckenkonus 5, der Teil der Schneckenwelle 2 ist, radial nach außen erstreckt, und endet am oberen Ende mit einer Gewindeendkante 6 (Figur 2).

Die Schneckenwelle 2 ist mit ihrem Schneckenkonus 5 am Boden des Futtermischwagens drehbar gelagert und wird über nicht dargestellte Antriebsmittel in Umdrehung versetzt.

Das Schneckengewinde 3 windet sich um den Schneckenkonus 5 und um den nach oben anschließenden, zylindrischen Teil der Schneckenwelle 2 herum in mehreren Windungen nach oben. Der Außendurchmesser des Schneckengewindes 3 nimmt dabei kontinuierlich von unten nach oben ab.

Die Mischschnecke ist üblicherweise in einem oben offenen Mischbehälter des Futtermischwagens angeordnet, der damit von oben her mit dem Futtermittel befüllbar ist. Der maximale Außendurchmesser des Schneckengewindes 3, d.h. der Außendurchmesser im Bereich der Gewindeanfangskante 4, überstreicht dabei zumindest den größten Teil der Bodenfläche des Mischbehälters, so dass dort keine ungemischten Futtermittelmengen liegen bleiben können.

Am Schneckengewinde 3 können nicht dargestellte Schneidmesser befestigt, insbesondere festgeschraubt werden, die etwas radial über den Außenrand des Schneckengewindes 3 vorstehen. Hierfür sind im Rand des Schneckengewindes 3 Schraubenlöcher 7 vorgesehen. Weiterhin kann die Vertikalschnecke einen nicht dargestellten Zusatzflügel aufweisen, der im Bodenbereich der Vertikalmischschnecke mit Abstand zur Gewindeanfangskante 4 am Schneckenkonus 5 befestigt ist. Ein derartiger Zusatzflügel kann den Mischeffekt und den Austrag des Futtermittels aus dem Futtermischwagen verbessern.

Wie ersichtlich, ist im Bereich des Schneckengewindes 3 ein Magnet 8 befestigt, der zum Aussondern von Metallteilen aus dem Futtermittel dient. Beim Magneten 8 kann es sich um einen Dauermagneten oder um einen Elektromagneten handeln. Der Magnet 8 entwickelt eine derartige Kraft, dass er in der Lage ist, eventuell vorhandene Metallteile aus dem Futtermittel, das auf der oberen Fläche 9 des Schneckengewindes 3 aufliegt und von diesem gemischt und nach oben befördert wird, anzuziehen und festzuhalten, wenn das Futtermittel über den Magneten 8 streift oder zumindest in die Nähe des Magneten 8 gelangt.

Der Magnet 8 befindet sich im Bereich einer Aussparung 10 des Schneckengewindes, die durch einen breiten Radialschlitz im Schneckengewinde 3 gebildet wird. Die Aussparung 10 erstreckt sich von der Schneckenwelle 2 bzw. dem Schneckenkonus 5 radial nach außen bis zum äußeren Rand des Schneckengewindes 3. Die Aussparung 10 unterteilt somit das Schneckengewinde 7 in einen vorauseilenden Abschnitt 3a, der, in Drehrichtung gesehen, vor der Aussparung 10 liegt, und einen Folgeabschnitt 3b, der hinter der Aussparung 10 liegt.

Im gezeigten Ausführungsbeispiel ist der Magnet 8 weiterhin in einer im Querschnitt U-förmigen Halterung 11 angeordnet, die nach oben hin offen ist. Die Halterung 11 ist mit ihren beiden seitlichen Wandschenkeln in geeigneter Weise an den die Aussparung 10 begrenzenden Wänden 12, 13 des Schneckengewindes 3 befestigt, insbesondere festgeschweißt. Die seitlichen Wandschenkel der Halterung 11 stehen dabei zweckmäßigerweise nach oben nicht über die obere Fläche 9 des Schneckengewindes 3 vor. Weiterhin ist die Tiefe der Halterung 11 beim dargestellten Ausführungsbeispiel derart dimensioniert, dass die obere Fläche 14 des in die Halterung 11 eingesetzten Magneten 8 mit der oberen Fläche 9 des anschließenden Schneckengewindes 3 zumindest im Wesentlichen fluchtet. Die obere Fläche des Magneten 8 bildet somit eine nach oben hin freie Magnetfläche 14, an der die ausgesonderten Metallteile haften bleiben. An der oberen freien Magnetfläche 14 können auch nach oben vorragende Längsstege 14a vorgesehen sein, welche Rückhalteleisten bilden, die das Abstreifen von anhaftenden Metallteilen durch das Futter-mittel erschweren. Weiterhin kann der Magnet 8 innerhalb der Halterung 11 auf unterschiedlichste Weise befestigt, beispielsweise festgeschraubt oder festgeklemmt, sein.

Der Magnet 8 erstreckt sich in radialer Richtung vom Schneckenkonus 5 der Schneckenwelle 2 bis zum äußeren Rand des Schneckengewindes 3 und bildet ein Brückenglied zwischen dem vorauseilenden Abschnitt 3a und dem Folgeabschnitt 3b.

In dem in den Figuren 1 bis 3 gezeigten Ausführungsbeispiel ist ein einzelner Magnet 8 vorgesehen, der sich, wie aus Figur 3 ersichtlich, diametral gegenüber der Gewindeanfangskante 4, d.h. um etwa 180° versetzt zu dieser, im Bereich der ersten, unteren Windung des Schneckengewindes 3 befindet. Es ist jedoch auch ohne weiteres möglich, den Magneten 8 an einer anderen Stelle des Schneckengewindes 3 oder auch mehrere Magneten 8 vorzusehen, die an unterschiedlichsten Stellen des Schneckengewindes 3 befestigt sein können.

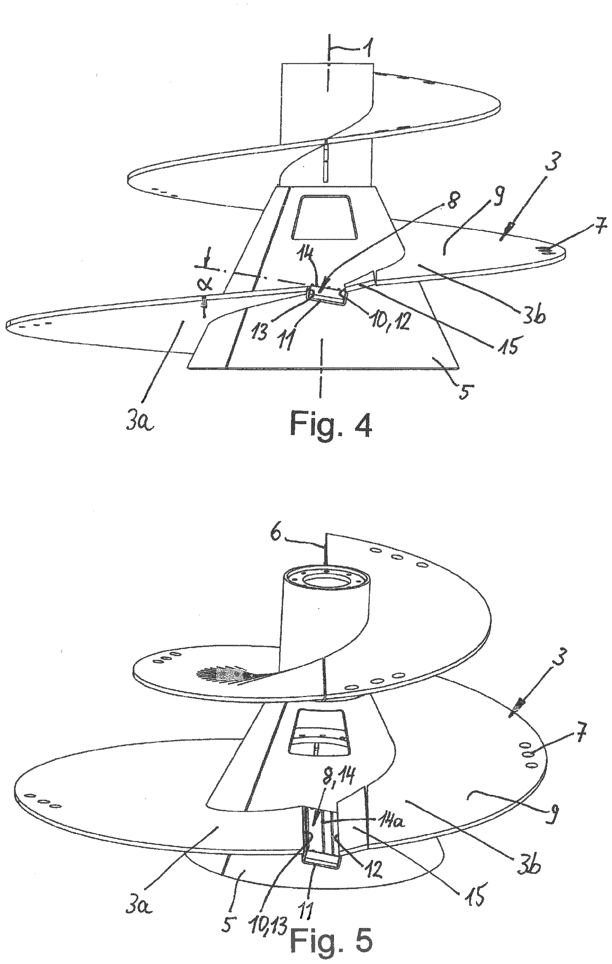

Die Figuren 4 und 5 zeigen ein zweites Ausführungsbeispiel der erfindungsgemäßen Vertikalmischschnecke. Mit Ausnahme der Ausrichtung des Magneten 8 und des benachbarten Bereichs des Schneckengewindes 3 ist diese Vertikalmischschnecke gleich ausgebildet wie diejenige des ersten Ausführungsbeispiels, so dass insoweit auf die entsprechenden Ausführungen des ersten Ausführungsbeispiels verwiesen wird.

Im Gegensatz zum ersten Ausführungsbeispiel ist der Magnet 8 beim zweiten Ausführungsbeispiel relativ zum Schneckengewinde 3 entgegen der Drehrichtung schräg abfallend geneigt. Der in Drehrichtung gesehen hintere Rand des Magneten 8 liegt somit tiefer als dessen vorderer Rand. Dies bedeutet mit anderen Worten, dass der Magnet eine nach oben freie Magnetfläche 14 zum Sammeln der Metallteile aufweist, die in Drehrichtung der Vertikalmischschnecke nach hinten schräg abfällt. Im gezeigten Ausführungsbeispiel beträgt der schräg abfallende Winkel α etwa 10° zur Horizontalebene bzw. etwa 15° relativ zum Schneckengewinde 3. Im Rahmen der Erfindung ist dieser Winkel jedoch in weiten Bereichen veränderbar. Beispielsweise kann der abfallende Winkel α zwischen 0° und 45° zur Horizontalebene betragen.

In dem in den Figuren 4 und 5 dargestellten Ausführungsbeispiel ist der Magnet 8 wiederum in einer im Querschnitt U-förmigen Halterung 11 eingesetzt und wird dort in geeigneter Weise, beispielsweise mittels einer Schraub- oder Klemmverbindung, befestigt. Der Übergang zwischen dem hinteren Randbereich des Magneten 8 bzw. der Halterung 11 und dem Schneckengewinde 3 wird durch ein Übergangsstück 15 des Schneckengewindes 3 realisiert, das eine größere Steigung als das übrige Schneckengewinde 3 hat. Durch das Übergangsstück 15 wird ein lückenloser Übergang zwischen dem Magneten 8 bzw. der Halterung 11 und dem nachfolgenden Schneckengewinde 3 geschaffen.

Durch die Schrägstellung des Magneten 8 wird erreicht, dass die am Magneten 8 anhaftenden Metallteile beim Drehen der Vertikalmischschnecke im "Windschatten" des vorbeistreichenden Futtermittels liegen, d.h. relativ zur vorbeistreichenden Futtermittelmasse etwas tiefer liegen, wodurch die Gefahr verringert wird, dass die am Magneten 8 anhaftenden Metallteile vom vorbeigeführten Futtermittel wieder abgestreift werden.

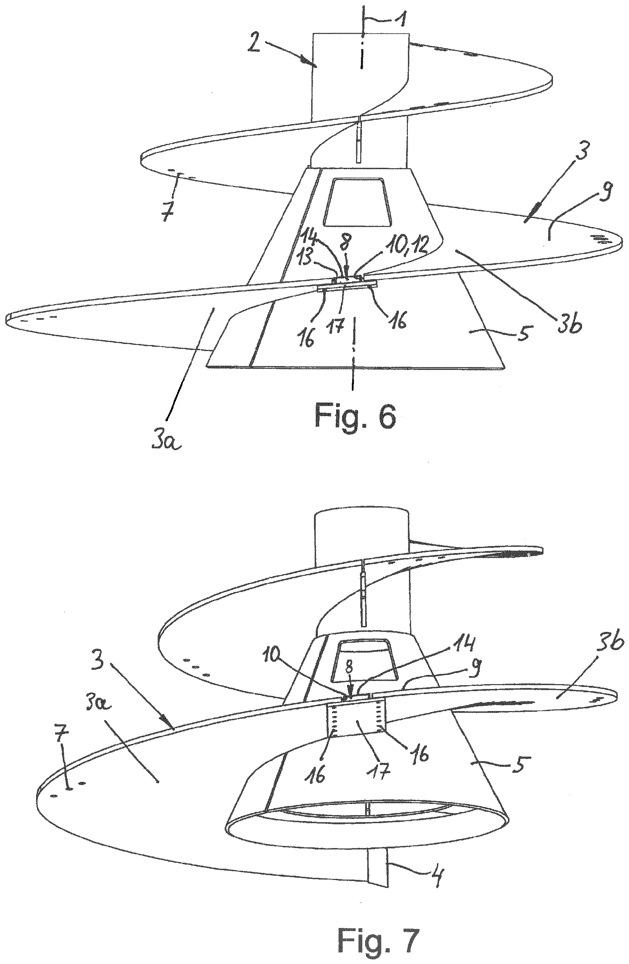

Die Figuren 6 und 7 zeigen ein drittes Ausführungsbeispiel der erfindungsgemäßen Vertikalmischschnecke. Mit Ausnahme der Art der Halterung des Magneten 8 ist die Vertikalmischschnecke des dritten Ausführungsbeispiels gleich zu derjenigen der ersten beiden Ausführungsbeispiele, so dass insoweit auf die Beschreibung des ersten und zweiten Ausführungsbeispiels verwiesen wird.

Wie aus den Figuren 6 und 7 ersichtlich, weist auch die Vertikalmischschnecke des dritten Ausführungsbeispiels eine Aussparung 10 im Bereich des Schneckengewindes 3 auf, d.h. einen etwas breiteren, radial verlaufenden Spalt zwischen dem vorauseilenden Abschnitt 3a und dem Folgeabschnitt 3b des Schneckengewindes 3. Dieser Spalt wird durch eine ebene Trägerplatte 17 überbrückt, die an der Unterseite des Schneckengewindes 3 angeordnet und mittels angedeuteter Schrauben 16 am vorauseilenden Abschnitt 3a und Folgeabschnitt 3b des Schneckengewindes 3 festgeschraubt ist. Der Magnet 8 ist in geeigneter Weise auf der Trägerplatte 17 befestigt und erstreckt sich in die Aussparung 10 derart hinein, dass er die Aussparung 10 zumindest überwiegend ausfüllt. Die nach oben hin freie Magnetfläche 14 befindet sich wiederum zumindest im Wesentlichen in der gleichen Höhe wie die obere Fläche des Schneckengewindes 3 in ihrem zum Magneten 8 benachbarten Bereich.

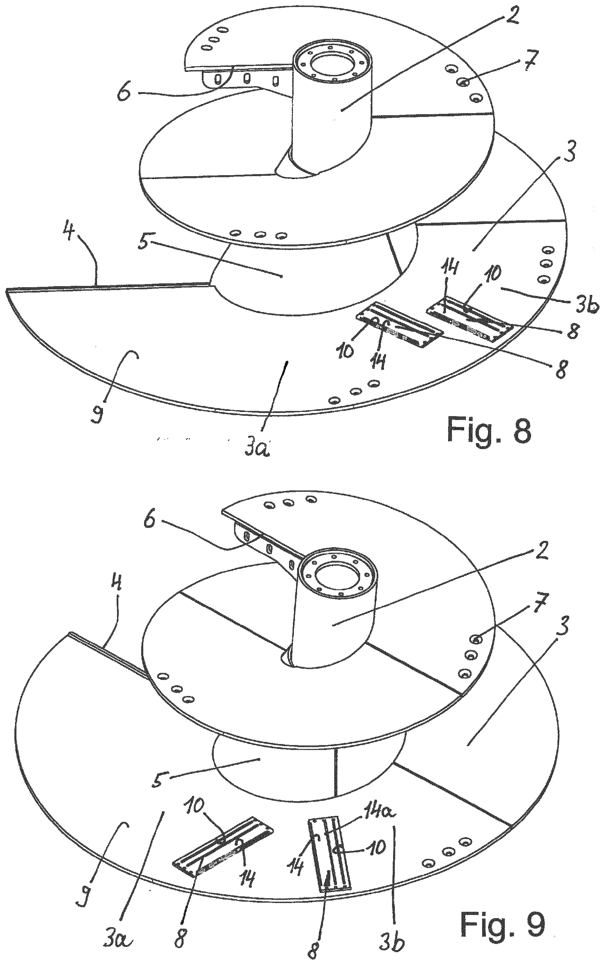

Figur 8 zeigt ein drittes Ausführungsbeispiel der erfindungsgemäßen Vertikalmischschnecke. Bei diesem Ausführungsbeispiel sind zwei Aussparungen 10 und darin eingesetzte Magneten 8 in Umfangsrichtung der Schneckenwelle 3 in kurzem Abstand hintereinander am Schneckengewinde 3 vorgesehen. Die Länge der beiden Aussparungen 10 bzw. Magneten 8 ist kürzer als die Breite des Schneckengewindes 3, so dass sich die beiden Magneten 8 nur jeweils über etwa zwei Drittel der Schneckenbreite erstrecken. Die beiden Aussparungen 10 bzw. Magneten 8 sind jedoch derart in radialer Richtung der Vertikalmischschnecke versetzt zueinander angeordnet, dass einer der beiden Magneten 8 nahe am inneren Rand des Schneckengewindes 3 und der andere Magnet 8 nahe am äußeren Rand des Schneckengewindes 3 endet, während sich die beiden Magnete 8 im mittleren Bereich überlappen. Die Aussparungen 10 und Magnete 8 sind bei diesem Ausführungsbeispiel weitgehend parallel zueinander angeordnet. Weiterhin ist ersichtlich, dass bei diesem Ausführungsbeispiel der innere und äußere Randbereich des Schneckengewindes 3 neben den Aussparungen 10 nicht unterbrochen ist und kontinuierlich weiterläuft.

Figur 9 zeigt ein fünftes Ausführungsbeispiel der erfindungsgemäßen Vertikalmischschnecke. Bei diesem Ausführungsbeispiel sind in gleicher Weise wie bei Figur 8 zwei Aussparungen 10 und darin eingesetzte Magneten 8 vorgesehen. Im Unterschied zu Figur 8 sind diese beiden Aussparungen 10 bzw. Magneten 8 jedoch nicht parallel, sondern in einem bestimmten Winkel zueinander angeordnet. Die Magneten 8 weisen dabei eine Länge auf, die mehr als drei Viertel der Breite des Schneckengewindes 3 entspricht. Bei einer derartigen Länge ist es nicht unbedingt erforderlich, die beiden Magneten 8 in radialer Richtung der Vertikalmischschnecke versetzt zueinander anzuordnen.

Im Übrigen können die in den Figuren 8 und 9 gezeigten Magneten 8 in gleicher Weise am Schneckengewinde 3 befestigt sein, wie anhand der in den Figuren 1 bis 7 dargestellten Ausführungsbeispiele beschrieben und gezeigt.

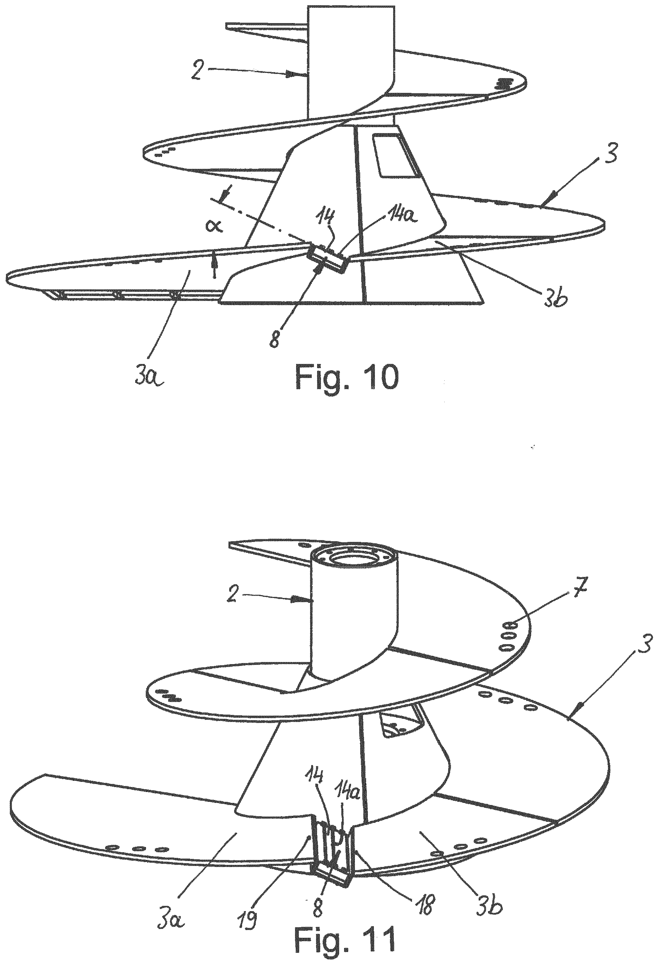

In den Figuren 10 und 11 ist eine sechste Ausführungsform der erfindungsgemäßen Vertikalmischschnecke dargestellt.

Bei dieser sechsten Ausführungsform ist der Magnet 8 wiederum in gleicher Weise, wie dies anhand der in den Figuren 4 und 5 dargestellten zweiten Ausführungsform beschrieben worden ist, schräg geneigt, d.h. in Umdrehungsrichtung nach hinten abfallend, am Schneckengewinde 3 angeordnet und befestigt. Insoweit wird auf die Beschreibung zum zweiten Ausführungsbeispiel verwiesen. Unterschiedlich ist, dass beim sechsten Ausführungsbeispiel der an dem Magneten 8 angrenzende Anschlussbereich 18 des Folgeabschnitts 3b des Schneckengewindes 3 tiefer liegt als der zum Magneten 8 benachbarte Endabschnitt 19 des vorauseilenden Abschnitts 3a. Der Anschlussbereich 18 liegt etwa auf gleicher Höhe oder nur geringfügig höher als der nachlaufende obere Rand des Magneten 8, während der Endabschnitt 19 des vorauseilenden Abschnitts 3a etwa auf gleicher Höhe oder nur geringfügig höher liegt als der vorauseilende obere Rand der freien Magnetfläche 14. Die Steigung des Schneckengewindes 3 ist somit zwischen dem vorauseilenden Abschnitt 3a und dem Folgeabschnitt 3b des Schneckengewindes 3 nicht kontinuierlich, sondern gestuft. Der vorauseilende Abschnitt 3a des Schneckengewindes 3 bildet damit im Übergangsbereich zum Magneten 8 eine Art Rampe, die bewirkt, dass das Futtermittel beim Drehen der Vertikalmischschnecke ohne oder nur mit wesentlich geringerem Druck über den Magneten 8 hinwegstreicht. Hierdurch wird die Gefahr des Abstreifens der vom Magneten 8 festgehaltenen Metallteile durch das Futtermittel wirkungsvoll reduziert.

Die Höhe der Gewindestufe kann variieren und hängt von der Schrägstellung des Magneten 8, d.h. vom Winkel α, sowie von der Breite des Magneten 8 in Umdrehungsrichtung der Vertikalmischschnecke ab. Beispielsweise ist es auch möglich, den Anschlussbereich 18 des Folgeabschnitts 3b auf gleiche Höhe wie den Endabschnitt 19 des vorauseilenden Abschnitts 3a anzuordnen. In diesem Fall erstreckt sich die obere freie Magnetfläche 14 horizontal.

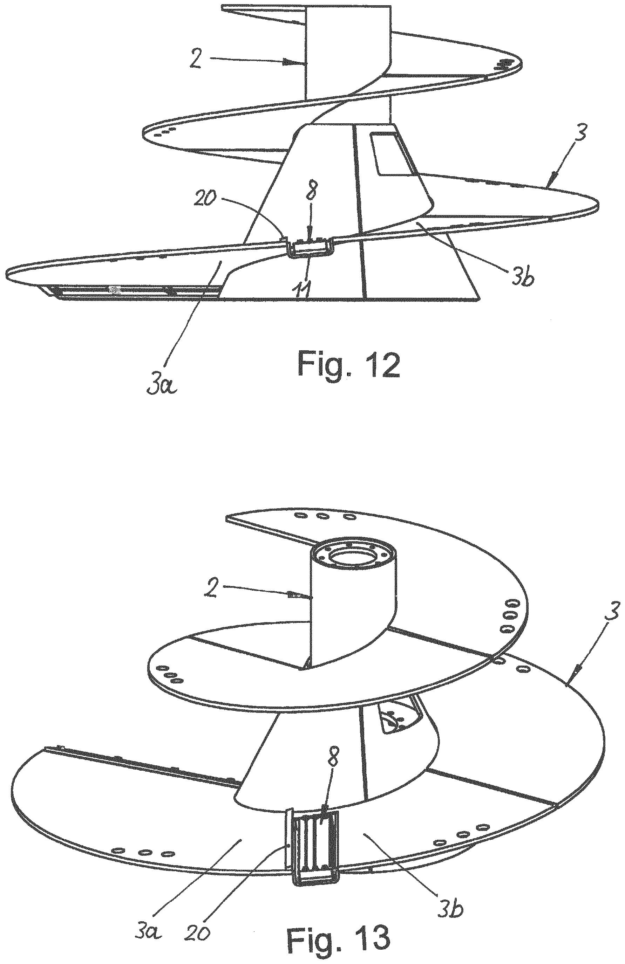

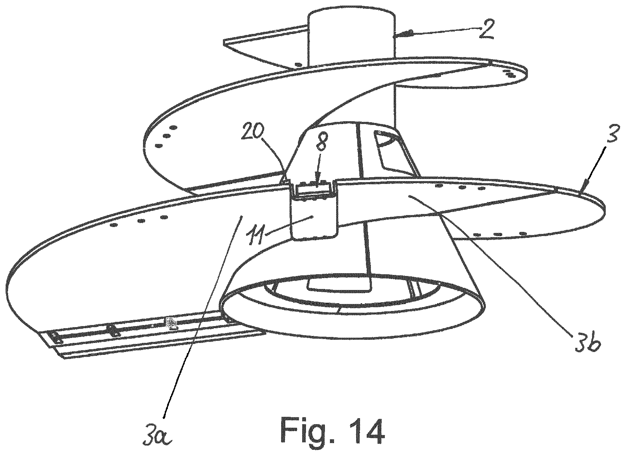

Anhand der Figuren 12 bis 14 wird im Folgenden eine siebte Ausführungsform der erfindungsgemäßen Vertikalmischschnecke beschrieben.

Bei dieser Ausführungsform ist der Magnet 8 in gleicher Weise wie bei der ersten Ausführungsform in einer U-förmigen Halterung 11 aufgenommen, welche die Aussparung 10 überbrückt. Auch die Anordnung des Magneten 8 und die Ausbildung des Schneckengewindes 3 sind gleich wie bei der ersten Ausführungsform, so dass insoweit auf die dortige Beschreibung verwiesen wird. Unterschiedlich ist, dass bei der siebten Ausführungsform vor dem Magneten 8 eine Abweiserleiste 20 am Schneckengewinde 3 befestigt, insbesondere angeschweißt, ist. Die Abweiserleiste 20 ist somit parallel zum Magneten 8 unmittelbar vor der Aussparung 10 am Ende des vorauseilenden Abschnitts 3a angeordnet.

Zweckmäßigerweise weist die Abweiserleiste 20 einen dreieckförmigen, keilartigen Querschnitt auf, so dass die obere Fläche der Abweiserleiste 20 eine schräge Rampe mit einer hinteren Kante bildet, die höher liegt als die obere freie Magnetfläche 14. Die Höhe der Abweiserleiste 20 beträgt vorzugsweise 50 % bis 200 %, insbesondere 80 % bis 150 %, der Materialdicke des Schneckengewindes 3.

Durch eine derartige Abweiserleiste 20 wird das Futtermittel beim Drehen der Vertikalmischschnecke unmittelbar vor dem Magneten 8 etwas angehoben, wodurch der Druck des Futtermittels auf den Magneten 8 und die Gefahr des Abstreifens von anhaftenden Metallgegenständen durch das Futtermittel reduziert wird und kann sich über die gesamte Breite des Schneckengewindes 3 erstrecken.

Die Länge der Abweiserleiste 20, in Radialrichtung der Vertikalmischschnecke gesehen, entspricht zweckmäßigerweise der Länge des Magneten 8.

Sind mehrere Magneten 8 vorgesehen, ist es zweckmäßig, wenn vor jedem Magneten 8 eine entsprechende Abweiserleiste 20 angeordnet ist.

Die in den Ausführungsbeispielen 1 bis 7 beschriebenen und dargestellten Elemente können beliebig miteinander kombiniert werden. Beispielsweise ist es ohne weiteres möglich, Abweiserleisten 20 auch bei Magneten 8 vorzusehen, die gemäß den Figuren 1 bis 11 angeordnet und befestigt sind. Weiterhin ist auch die stufige Ausbildung des Schneckengewindes 3, die anhand der Figuren 10 und 11 beschrieben worden ist, bei sämtlichen anderen Ausführungsformen realisierbar.

Ferner ist es ohne weiteres möglich, nicht nur einen oder zwei Magneten 8, sondern eine größere Anzahl von Magneten, beispielsweise drei bis fünf Magneten 8, zueinander beabstandet und hintereinander am Schneckengewinde 3 vorzusehen. Weiterhin sind unterschiedlichste Schraub- oder Klemmvorrichtungen bzw. Halterungen 11 möglich, mit denen der Magnet 8 bzw. die Magneten 8 am Schneckengewinde 3 befestigt werden kann/können.

## Patentansprüche

1. Vertikalmischschnecke für Futtermischwagen zum Mischen von Futtermittel, umfassend:
- eine um eine vertikale Drehachse (1) drehbare Schneckenwelle (2),
- ein sich spiralförmig um die Schneckenwelle (2) herum erstreckendes Schneckengewinde (3),
- mindestens einen Magneten (8) zum Abscheiden von Metallteilen aus dem Futtermittel während des Mischvorgangs,
**dadurch gekennzeichnet, dass** der Magnet (8) im Bereich einer Aussparung (10) zwischen dem Anfang und dem Ende des Schneckengewindes (3) angeordnet ist und die Aussparung (10) zumindest überwiegend überbrückt.

2. Vertikalmischschnecke nach Anspruch 1, **dadurch gekennzeichnet, dass** der Magnet (8) in einer im Querschnitt U-förmigen Halterung (11) eingesetzt ist, die beidseits an dem die Aussparung (10) begrenzenden Wänden des Schneckengewindes (3) befestigt ist.

3. Vertikalmischschnecke nach Anspruch 1, **dadurch gekennzeichnet, dass** der Magnet (8) an einer ebenen Trägerplatte (17) befestigt ist, welche die Aussparung (10) an der Unterseite des Schneckengewindes (3) vollständig überbrückt und dort festgeschraubt oder festgeklemmt ist.

4. Vertikalmischschnecke nach einem der vorhergehenden Ansprüche, **dadurch gekennzeichnet, dass** der Magnet (8) eine nach oben freie Magnetfläche (14) zum Sammeln der Metallteile umfasst, wobei die Magnetfläche (14) die gleiche Steigung wie das Schneckengewinde (3) im Nachbarschaftsbereich des Magneten (8) aufweist.

5. Vertikalmischschnecke nach einem der Ansprüche 1 bis 3, **dadurch gekennzeichnet, dass** der Magnet (8) eine nach oben freie Magnetfläche (14) zum Sammeln der Metallteile aufweist, wobei die Magnetfläche (14) in Drehrichtung der Vertikalmischschnecke nach hinten mit einem Winkel zwischen 0° und 45° zur Horizontalebene schräg abfällt.

6. Vertikalmischschnecke nach Anspruch 1, **dadurch gekennzeichnet, dass** sich der Magnet (8) in radialer Richtung der Vertikalmischschnecke über 80 % bis 100 % der Breite des Schneckengewindes (3) erstreckt.

7. Vertikalmischschnecke nach einem der vorhergehenden Ansprüche, **dadurch gekennzeichnet, dass** mehrere Magneten (8) vorgesehen sind, die in radialer Richtung der Vertikalmischschnecke relativ zueinander versetzt am Schneckengewinde (3) befestigt sind.

8. Vertikalmischschnecke nach einem der vorhergehenden Ansprüche, **dadurch gekennzeichnet, dass** mehrere Magneten (8) vorgesehen sind, die relativ zueinander winklig hintereinander oder parallel zueinander angeordnet sind.

9. Vertikalmischschnecke nach einem der vorhergehenden Ansprüche, **dadurch gekennzeichnet, dass** das Schneckengewinde (3) im Bereich der Aussparung (10) stufig ausgebildet ist, wobei ein Anschlussbereich (18) eines Folgeabschnitts (3b) des Schneckengewindes (3) tiefer oder gleich hoch liegt wie ein Endabschnitt (19) eines vorauseilenden Abschnitts (3a) des Schneckengewindes (3).

10. Vertikalmischschnecke nach einem der vorhergehenden Ansprüche, **dadurch gekennzeichnet, dass** vor der Aussparung (10) eine Abweiserleiste (20) auf dem Schneckengewinde (3) angeordnet ist, welche eine Rampe für das Futtermittel bildet.

## Claims

1. A vertical mixing screw for a feedstuff mixing vehicle for the mixing of feeding stuff, said vertical mixing screw comprising:
- a worm gear shaft (2) that is rotatable about a vertical axis of rotation (1),
- a screw thread (3) that helically extends around the worm gear shaft (2),
- at least one magnet (8) that is configured for the separation of metal particles from the feeding stuff during the mixing operation,
**characterized in that** the magnet (8) is arranged in the area of a recess (10) between the beginning and the end of the screw thread (3) and at least mainly bridges the recess (10).

2. The vertical mixing screw according to claim 1 , **characterized in that** the magnet (8) is inserted in a holder (11) that is U-shaped in cross-section, which holder (11) at both sides thereof is mounted to the walls of the screw thread (3) confining the recess (10).

3. The vertical mixing screw according to claim 1, **characterized in that** the magnet (8) is attached to a flat carrier plate (17) that completely bridges the recess (10) at the lower side of the screw thread (3) and that is bolted or clamped at that position.

4. The vertical mixing screw according to one of the preceding claims, **characterized in that** the magnet (8) comprises a magnetic surface (14) which is not restricted upwards, for collecting the metal particles, wherein the magnetic surface (14) has the same pitch as the screw thread (3) in the neighborhood of the magnet (8).

5. The vertical mixing screw according to one of the claims 1 to 3, **characterized in that** the magnet (8) comprises a magnetic surface (14) which is not restricted upwards, for collecting the metal particles, wherein the magnetic surface (14) in the direction of rotation of the vertical mixing screw slopes down towards the back with an angle between 0° and 45° to the horizontal plane.

6. The vertical mixing screw according to claim 1, **characterized in that** the magnet (8) in the radial direction of the vertical mixing screw covers 80% to 100% of the width of the screw thread (3).

7. The vertical mixing screw according to one of the preceding claims, **characterized in that** several magnets (8) are provided that in the radial direction of the vertical mixing screw are attached to the screw thread (3) in a manner relatively offset to one another.

8. The vertical mixing screw according to one of the preceding claims, **characterized in that** several magnets (8) are provided that relatively to one another are arranged in a manner angled one after the other or in parallel.

9. The vertical mixing screw according to one of the preceding claims, **characterized in that** the screw thread (3) in the area of the recess (10) is formed in a stepped manner, wherein a connection area (18) of a subsequent section (3b) of the screw thread (3) is arranged at a lower level or at the same level as an end section (19) of a leading or front section (3a) of the screw thread (3).

10. The vertical mixing screw according to one of the preceding claims, **characterized in that** a keep-off rail (20) is arranged on the screw thread (3) in front of the recess (10), which keep-off rail (20) forms a platform for the feeding stuff.

## Revendications

1. Vis mélangeuse verticale pour chariot mélangeur de fourrage pour mélanger du fourrage, comportant :
- un arbre de vis (2) susceptible de tourner autour d'un axe de rotation vertical (1),
- un filet de vis (3) qui s'étend en forme de spirale tout autour de l'arbre de vis (2),
- au moins un aimant (8) pour séparer des pièces métalliques hors du fourrage pendant l'opération de mélange,
**caractérisée en ce que** l'aimant (8) est agencé dans la zone d'une échancrure (10) entre le début et la fin du filet de vis (3) et ponte au moins majoritairement l'échancrure (10).

2. Vis mélangeuse verticale selon la revendication 1, **caractérisée en ce que** l'aimant (8) est mis en place dans une monture (11) de section transversale en forme de U qui est fixée de part et d'autre sur les parois du filet de vis (3) délimitant l'échancrure (10).

3. Vis mélangeuse verticale selon la revendication 1, **caractérisée en ce que** l'aimant (8) est fixé sur une plaque de support plane (17) qui ponte entièrement l'échancrure (10) sur le côté inférieur du filet de vis (3) et qui y est fixée par vissage ou par coincement.

4. Vis mélangeuse verticale selon l'une des revendications précédentes, **caractérisée en ce que** l'aimant (8) comprend une surface magnétique (14) dégagée vers le haut pour collecter les pièces métalliques, la surface magnétique (14) présentant la même pente que le filet de vis (3), dans la zone voisine de l'aimant (8).

5. Vis mélangeuse verticale selon l'une des revendications 1 à 3, **caractérisée en ce que** l'aimant (8) comprend une surface magnétique (14) dégagée vers le haut pour collecter les pièces métalliques, la surface magnétique (14) descendant en oblique vers l'arrière avec un angle compris entre 0° et 45° par rapport au plan horizontal, en direction de rotation de la vis mélangeuse verticale.

6. Vis mélangeuse verticale selon la revendication 1, **caractérisée en ce que** l'aimant (8) s'étend sur 80 % à 100 % de la largeur du filet de vis (3) en direction radiale de la vis mélangeuse verticale.

7. Vis mélangeuse verticale selon l'une des revendications précédentes, **caractérisée en ce qu'**il est prévu plusieurs aimants (8) qui sont fixés sur le filet de vis (3) en étant décalés les uns par rapport aux autres en direction radiale de la vis mélangeuse verticale.

8. Vis mélangeuse verticale selon l'une des revendications précédentes, **caractérisée en ce qu'**il est prévu plusieurs aimants (8) qui sont agencés sous un angle les uns derrière les autres ou parallèlement les uns aux autres.

9. Vis mélangeuse verticale selon l'une des revendications précédentes, **caractérisée en ce que** le filet de vis (3) est réalisé en gradin dans la zone de l'échancrure (10), une zone de raccordement (18) d'un tronçon suivant (3b) du filet de vis (3) étant plus profonde ou de la même hauteur qu'un tronçon d'extrémité (19) d'un tronçon précédent (3a) du filet de vis (3).

10. Vis mélangeuse verticale selon l'une des revendications précédentes, **caractérisée en ce qu'**un listel déflecteur (20) est agencé sur le filet de vis (3) en avant de l'échancrure (10), qui forme une rampe pour le fourrage.
